# EUROPÄISCHE PATENTANMELDUNG

(11) **EP 2 058 081 A2**
(43) Veröffentlichungstag der Anmeldung: **13.05.2009**
(21) Anmeldenummer: 08018920.2
(22) Anmeldetag: 30.10.2008
(51) Int. Cl.: B23K 35/362, B23K 35/02

(54) **Flüssigmetallpaste**

(30) Priorität: 09.11.2007 DE 102007053379
(71) Anmelder: Moeller GmbH, 53115 Bonn (DE)
(72) Erfinder: Freyermuth, Thomas, 53505 Kalenborn (DE); Kremers, Wolfgang, 53229 Bonn (DE)

(57) **Zusammenfassung**

Die Erfindung betrifft eine Flüssigmetallpaste, deren Herstellung, ein Kontaktierungsverfahren und die Verwendung der Flüssigmetallpaste. Dadurch wird die Arbeitssicherheit beim Verbinden von elektrischen Leitern verbessert und die Handhabung im Vergleich zu Flüssigmetall generell vereinfacht.

## Beschreibung

Die Erfindung betrifft eine Flüssigmetallpaste, deren Herstellung, ein Kontaktierungsverfahren und die Verwendung der Flüssigmetallpaste.

Als elektrische Leiter werden in Anlagen Kupferschienen verbaut. Dabei werden sie üblicherweise mittels Schraubverbindungen mit anderen Schienen oder Anschlussklemmen an Schaltgeräten verschraubt. Sind die Klemmen oder Schienen beispielsweise durch Staub oder Öl schon leicht oxidiert oder verschmutzt, führt das zu erhöhten Übergangswiderständen, die wiederum zur Erwärmung der Kontaktstelle führen und im schlimmsten Fall die Bildung eines Störlichtbogens hervorrufen. Ein solcher Störlichtbogen kann letztendlich eine ganze Schaltanlage zerstören und damit die Energieversorgung für längere Zeit unterbrechen.

Die Verwendung von Flüssigmetallpaste zur Verbesserung des Übergangswiderstandes ist bislang unbekannt.

DE 2652506 A1 beschreibt eine Mischung aus Gallium und Galliumoxid. So werden Oberflächen von Wandungskörpern und Stromzuführungsplatten sowie das Innere eines Kontaktkörpers und dessen Stromzuführungsplatte mit flüssigem Gallium oder flüssigen Legierungen von Gallium überzogen. Da Gallium bei Raumtemperatur fest ist, kann es deshalb bei Raumtemperatur nicht in Form einer Flüssigmetallpaste verarbeitet werden. Nach dieser Druckschrift muss das Gallium für die Verarbeitung zunächst geschmolzen werden.

In der DE19916322 A1 wird ein Stromleiteranschluss aus Kupfer mit einem Protektor vor einem Lichtbogen und vor Flüssigmetalleinwirkung durch einen dünnen Überzug mit einer flüssigen Legierung geschützt.

In diesen bekannten Ausführungsformen werden die Kontaktmaterialien mit einer flüssigen Legierung oder einem flüssigen Metall überzogen. Dabei behindert die Oberflächenspannung des Flüssigmetalls eine gleichmäßige Beschichtung. Auch kann die flüssige Legierung oder das flüssige Metall an den Kontaktoberflächen abperlen. Besonders beim Verschrauben von Stromleitern kann dann flüssiges Metall oder die flüssige Legierung an den Kontaktstellen austreten. Zur Beschichtung wird daher mehr Material gebraucht, als eigentlich für die Kontaktverbesserung notwendig wäre. Außerdem besteht die Gefahr, dass das überschüssige und sehr gut leitende Flüssigmetall von der Kontaktstelle aus in andere Anlagenteile tropft und dort zu ungewollten Kurzschlüssen führt.

Der Erfindung liegt daher die Aufgabe zugrunde, den Übergangswiderstand dauerhaft zu verbessern, die Arbeitssicherheit beim Verbinden von elektrischen Leitern zu erhöhen und die Handhabung im Vergleich zu Flüssigmetall generell zu vereinfachen.

Ausgehend vom aufgefundenen Stand der Technik wird die der Erfindung zu Grunde liegende Aufgabe erfindungsgemäß durch die Merkmale der unabhängigen Ansprüche gelöst, während den abhängigen Ansprüchen vorteilhafte Weiterbildungen der Erfindung zu entnehmen sind.

In einer ersten Ausführungsform wird die der Erfindung zu Grunde liegende Aufgabe gelöst durch eine Flüssigmetallpaste enthaltend Flüssigmetall und Oxid dieses Flüssigmetalls, die dadurch gekennzeichnet ist, dass der Anteil an Oxid mindestens 0,1 Gew.% und der Schmelzpunkt des Flüssigmetalls höchstens 20 °C beträgt. Wird diese Flüssigmetallpaste zwischen zwei elektrischen Leitern vorgesehen, wird hierdurch der Übergangswiderstand dauerhaft verbessert. Die erfindungsgemäße Flüssigmetallpaste hat den Vorteil, dass es beim Auftragen der Paste auf Kontaktstellen von elektrischen Leitern nicht mehr zum Abtropfen des Flüssigmetalls durch die Oberflächenspannung des Flüssigmetalls kommen kann, wie dies bisher problematisch war. Die erfindungsgemäße Flüssigmetallpaste kann zudem wesentlich leichter dosiert und gehandhabt werden, als die bisher verwendeten Flüssigmetalle. Die Flüssigmetallpaste ist verstreichbar und läuft nicht aus den Kontaktstellen aus. Auch die Sicherheit bei der Anwendung wird durch die Vermeidung des bislang problematischen Tropfens von Flüssigmetall erhöht.

Selbst wenn überschüssige erfindungsgemäße Flüssigmetallpaste aus der mechanischen Verbindung der elektrischen Leiter beispielsweise beim Verschrauben austritt, wird diese nicht Tropfen bilden, sondern kann leicht beispielsweise mit einem Wischlappen entfernt werden.

Durch die Verwendung der erfindungsgemäßen Flüssigmetallpaste können auch elektrische Leiter mit rauen Oberflächen sicher elektrisch verbunden werden, da die wirksame Kontaktoberfläche wesentlich erhöht wird.

Die Viskosität der Flüssigmetallpaste beträgt vorzugsweise mindestens 50 Pa s, insbesondere mindestens 10⁴ Pa s bei 20 °C. Die Viskosität kann beispielsweise gemäß ISO 2555 bei Bestimmung nach Brookfield Typ A mit einer Spindel 6 bei 10 U/min gemessen werden. Durch die hohe Viskosität kann besonders effizient Tropfenbildung beim Verschrauben von Stromschienen verhindert werden.

Die thermische Leitfähigkeit der erfindungsgemäßen Flüssigmetallpaste liegt vorzugsweise in einem Bereich von 20 bis 50 W/mK. Die spezifische Wärmekapazität der erfindungsgemäßen Flüssigmetallpaste liegt vorzugsweise in einem Bereich von 300 bis 350 J/kg°C.

Das Flüssigmetall ist vorteilhafterweise ausgewählt aus der Gruppe Quecksilber, Gallium-Indium-Zinn-Legierung oder Gallium-Indium-Zink-Kupfer-Legierung und ist insbesondere eine eutektische Legierung.

Dadurch kann eine besonders leichte Verarbeitung zu der Paste erzielt werden, da diese Flüssigmetalle bereits deutlich unterhalb von Raumtemperatur schmelzen.

Das Flüssigmetall ist vorzugsweise eine Legierung enthaltend Gallium in einem Bereich von 60 bis 75 Gew.%, Indium in einem Bereich von 15 bis 24 Gew.%, und Zinn in einem Bereich von 8 bis 17 Gew.%. Eine solche Legierung hat sich als besonders geeignet erwiesen, da sie einen Schmelzpunkt von unter 10 °C hat und so besonders leicht zu der erfindungsgemäßen Paste verarbeitet werden kann. Verzugsweise beträgt der Schmelzpunkt des Flüssigmetalls deshalb höchstens 15 °C, insbesondere höchstens 10°C. Vorzugsweise sind Antimon oder Antimonverbindungen höchstens in einer Menge von bis zu 0,5 Gew.% enthalten, da ansonsten die Benetzung der Kontaktstellen durch die Paste beeinträchtigt werden kann.

Das Flüssigmetall und das Oxid des Flüssigmetalls sind vorteilhafterweise innig miteinander vermischt. Dadurch kann besonders gut verhindert werden, dass beispielsweise beim Verschrauben von Strom-Kupferschienen eventuell sonst großvolumig vorhandenes Flüssigmetall als Tropfen austreten kann.

Der Oxidgehalt in der Flüssigmetallpaste beträgt vorzugsweise mindestens 0,5 Gew.%, insbesondere mindestens 0,8 Gew.%. Dadurch kann die Sicherheit beim Umgang mit der erfindungsgemäßen Paste durch Verhinderung von Tropfenbildung deutlich erhöht werden, ohne dabei die Leitfähigkeit zu sehr zu beeinträchtigen. Vorteilhafterweise beträgt der Gehalt an Oxid höchstens 10 Gew.%, insbesondere höchstens 5 Gew.%, da die Paste ansonsten eine zu hohe Viskosität annimmt und dann schwierig zu verarbeiten ist. Zudem verändert sich andernfalls auch die Leitfähigkeit, so dass ein zuverlässiger Kontakt dann nicht mehr ohne weiteres gewährleistet werden kann.

Vorzugsweise enthält die erfindungsgemäße Flüssigmetallpaste partikuläres Material, insbesondere Graphitpulver, Kupferpulver und/oder Silberpulver.

In einer weiteren Ausführungsform wird die der Erfindung zu Grunde liegende Aufgabe gelöst durch ein Verfahren zur Herstellung einer Flüssigmetallpaste, dadurch gekennzeichnet, dass man ein Flüssigmetall in Kontakt mit Sauerstoff rührt, so dass das an der Kontaktfläche mit Sauerstoff entstehende Oxid in das Flüssigmetall eingerührt wird, bis der Gehalt an Oxid in der Flüssigmetallpaste mindestens 0,1 Gew.% beträgt. Schon dieser geringe Anteil an Oxid reicht vollkommen aus, um das Flüssigmetall pastös werden zu lassen. Es wird vermutet, dass hierfür zum einen die Fähigkeit des dreiwertigen Galliumoxids zur Gallatbildung und zum anderen die Fähigkeit von Ga₂O zur Polymerisation verantwortlich ist.

Das Flüssigmetall, insbesondere das Eutektikum GaInSn, hat die Eigenschaft, an seiner Oberfläche eine dünne Oxidhaut zu bilden, wenn es in Kontakt mit Sauerstoff kommt. Diese Eigenschaft wird bei der vorliegenden Erfindung genutzt, um eine Flüssigmetallpaste herzustellen. Damit werden die Kontaktstellen von elektrischen Leitern versehen, um deren Kontaktübergangswiderstand zu senken und diesen im Verlaufe der Zeit sicherzustellen.

Vorteilhafterweise wird die laufend an der Luft entstehende und sehr dünne Oxidhaut durch stetiges und/oder langsames Umrühren in das Flüssigmetall eingerührt. Vorzugsweise wird dabei der Rührer auf ein gleichmäßiges Rührtempo in einem Bereich von 0,5 bis 10 Umdrehungen pro Sekunde eingestellt. Es wird vorteilhafterweise vermieden, Sauerstoff oder Luft direkt einzurühren oder unterzuschlagen, damit keine Blasen entstehen und sich nachträglich kein zusätzliches Oxid bilden kann und so die Leitfähigkeit der Paste nachträglich deutlich verändert werden kann. Diese Oxidhaut schützt das Flüssigmetall normalerweise vor weiterer Oxidation. Durch das Einrühren und/oder Unterziehen der entstandenen Oxidhaut kann wieder frisches Flüssigmetall mit Luft in Berührung kommen, welches dann wieder eine Oxidhaut bilden kann. Nach einiger Zeit entsteht so vorteilhafterweise die erfindungsgemäße Paste. Vorzugsweise wird das Flüssigmetall zur Erzeugung der erfindungsgemäßen Flüssigmetallpaste für eine Zeitdauer von wenigstens von 1 h, insbesondere 5 h, ganz besonders bevorzugt wenigstens 25 h und höchstens 35 h, insbesondere höchstens 31 h gerührt. Wird das Flüssigmetall zu kurz gerührt, so ist die Viskosität der entstehenden Paste zu niedrig, als dass die erfindungsgemäßen Vorteile voll ausgeschöpft werden könnten. Wird das Flüssigmetall zu lang gerührt, so steigt die Viskosität zu stark an, so dass die Paste nicht mehr sinnvoll verarbeitet werden kann und zudem die Leitfähigkeit im Vergleich zum reinen Flüssigmetall deutlich abnimmt.

Die untergerührte Oxidhaut stabilisiert das Flüssigmetall, wobei zwischen den Oxidhäuten im Volumen des Flüssigmetalls nach wie vor flüssiges Eutektikum vorliegt.

Vorzugsweise ist der Sauerstoff Luftsauerstoff, da hierdurch besonders kostensparend gearbeitet werden kann.

In einer weiteren Ausführungsform wird die der Erfindung zu Grunde liegende Aufgabe gelöst durch ein Verfahren zu Verringerung des Kontaktwiderstandes von Kontaktstellen von elektrischen Leitern, dadurch gekennzeichnet, dass man die Kontaktstellen mit der erfindungsgemäßen Flüssigmetallpaste versieht, anschließend die Leiter an den Kontaktstellen kontaktiert.

Dadurch nimmt der Kontaktübergangswiderstand zwischen zwei Leitern mit der Zeit sogar überraschenderweise ab. Im Gegensatz hierzu nimmt der Kontaktübergangswiderstand ohne die erfindungsgemäße Flüssigmetallpaste durch Korrosion und ähnliche Vorgänge nämlich üblicherweise zu.

Vorteilhafterweise verbindet man daran anschließend die Leiter gegebenenfalls miteinander mechanisch, insbesondere kraftschlüssig.

Das erfindungsgemäße Verfahren ist besonders vorteilhaft, da elektrische Leiter an ihren Kontaktstellen bei Raumtemperatur mit der erfindungsgemäßen Flüssigmetallpaste versehen werden können. Dies kann beispielsweise durch aufpinseln oder einstreichen geschehen. Die Verbindung geschieht vorzugsweise durch Verschrauben, Vernieten, Pressen oder Schellen.

Beim Verbinden der elektrischen Leiter kommt es durch die pastöse Konsistenz der erfindungsgemäßen Flüssigmetallpaste nicht wie bislang zum Austritt von Flüssigmetall beim Zusammenschrauben der elektrischen Leiter. So geht also kein wertvolles Material verloren.

Die Paste kann also beispielsweise dazu benutzt werden, um elektrische Leiter an ihren Verbindungsstellen zu beschichten und anschließend zu verschrauben.

Da das Flüssigmetall nur an der Oberfläche eine sehr dünne Oxidhaut ausbildet, diese aber beispielsweise durch Temperaturschwankungen oder mechanische Bewegung leicht zerstört werden kann, weist auch die Paste immer einen direkten Kontakt der leitenden Bestandteile der Paste mit dem Leitermaterial auf.

Man erhält durch die Diffusion des Flüssigmetalls, insbesondere der Legierungsbestandteile, in den Leiterwerkstoff eine innige Verbindung der Leitermaterialien mit der Flüssigmetallpaste. Durch die geringe Menge des Flüssigmetalls, die bei der Verbindung gebraucht wird, kommt es nach einiger Zeit durch Veränderung der Flüssigmetallzusammensetzung zum Stillstand der Diffusion. Während der Diffusionsphase wurde beobachtet, dass der Übergangswiderstand immer geringer wurde und dann konstant gering war. Ein wesentlicher Vorteil der vorliegenden Erfindung liegt darin, dass nach Abschluss des Diffusionsprozesses ein konstanter und geringer Übergangswiderstand in Langzeitwirkung erzielt werden kann.

Der Vorteil einer solchen Verbindung gegenüber einer Lötung oder anderen festen Verbindung liegt darin, dass man trotz einer innigen elektrischen Verbindung die Kontaktstellen der Leiter leicht wieder lösen kann.

Durch die vorherige leichte Oxidation des Flüssigmetalls und die Bildung der erfindungsgemäßen Flüssigmetallpaste, wird die Handhabung in der Fertigung und die Installation von elektrischen Anlagen einfacher und sicherer.

Weiterhin wird durch den Einsatz der erfindungsgemäßen Flüssigmetallpaste Gasaustausch mit den Kontaktflächen der elektrischen Leiter unterbunden und so eine Alterung und/oder Oxidation der Kontaktstellen verhindert.

Durch das erfindungsgemäße Verfahren können auch die Anpresskräfte der Verbindungen herabgesetzt werden, so dass bei gleich bleibendem Übergangswiderstand durch absolut geringeres Materialfließen eine längere Lebensdauer erzielt wird und eine geringer dimensionierte Verbindungstechnik (wie beispielsweise Schrauben M8 statt M12) eingesetzt werden kann.

In einer weiteren Ausführungsform wird die der Erfindung zu Grunde liegende Aufgabe gelöst durch eine Kontaktstelle eines ersten elektrischen Leiters, dadurch gekennzeichnet, dass diese mit einer anderen Kontaktstelle eines anderen zweiten elektrischen Leiters kontaktiert ist, wobei sich zwischen den Kontaktstellen die erfindungsgemäße Flüssigmetallpaste befindet. Hierdurch wird der Übergangswiderstand dauerhaft verbessert.

In Schaltgeräten für größere Ströme wird besonders auf geringe Pfadwiderstände geachtet, um die im Gerät entstehende Verlustleistung gering zu halten. Durch die erfindungsgemäße Kontaktstelle wird der Übergangswiderstand verringert und über die Lebensdauer gewährleistet. Dies kann erfindungsgemäß ohne die Gefahr von unkontrolliertem Austritt von Flüssigmetall geschehen. Durch die leichte Lösbarkeit ist ein Auswechseln defekter Schaltgeräte besonders leicht möglich.

Vorzugsweise bestehen der erste und der zweite elektrische Leiter eines elektrischen Kontakts aus Kupfer, insbesondere aus verzinntem Kupfer. Durch die Verzinnung lässt sich ein Leiter noch besser mit der erfindungsgemäßen Flüssigmetallpaste benetzen, da Zinn Bestandteil der bevorzugten Flüssigmetallpaste ist. Vorteilhafterweise besteht keiner der Leiter aus Aluminium, da sich Aluminium im bevorzugten Flüssigmetall leicht auflöst. Alternativ kann der erste Leiter auch aus einem vom zweiten Leiter verschiedenen Material bestehen. So kann beispielsweise einer der Leiter aus PTC-Polymer (Polymer mit positivem thermischem Ausdehnungskoeffizienten) bestehen.

In einer weiteren Ausführungsform wird die der Erfindung zu Grunde liegende Aufgabe gelöst durch die Verwendung der erfindungsgemäßen Flüssigmetallpaste zur Herabsetzung des Übergangswiderstandes bei der Verbindung von Leitern, insbesondere im Anlagenbau oder in Schaltgeräten. In Schaltgeräten wird die erfindungsgemäße Flüssigmetallpaste vorteilhafterweise in Verbindung mit Litzen, Schraubstellen, Klemmstellen oder auch Schiebestellen eingesetzt. Aufgrund der hohen Verdampfungstemperatur von über 2000 °C sind auch entsprechende Hochtemperaturanwendungen bevorzugt möglich.

So wird durch die Erfindung der Übergangswiderstand an den Kontaktstellen von Strom-Kupferschienen zu Strom-Kupferschienen im Anlagenbau oder bei Kupferleitern zu Kupferleitern in Schaltgeräten signifikant verbessert.

Die vorliegende Erfindung ist nicht auf die vorstehend beschriebenen Ausführungsformen beschränkt, sondern umfasst auch alle im Sinne der Erfindung gleichwirkenden Ausführungsformen.

### Ausführungsbeispiel

100g Galinistan fluid der Firma Geratherm Medical AG wurden in einem Becherglas 30 h lang gleichmäßig und stetig mit etwa 3 Umdrehungen pro Sekunde gerührt. Dabei wurde vermieden, dass Sauerstoff direkt untergeschlagen wurde, damit keine Luftblasen entstehen. Der sich dabei an der Oberfläche zur Luft bildende Oxidfilm wurde dabei kontinuierlich unter das Galinistan fluid untergerührt, bis eine im Wesentlichen nicht fließfähige Paste entstand.

Zwei Strom-Kupferschienen wurden an ihren Kontakstellen mit der erfindungsgemäß erhaltenen Flüssigmetallpaste bestrichen und anschließend verschraubt. In einem Vergleichsversuch wurden die Strom-Kupferschienen nicht mit der Flüssigmetallpaste vorbehandelt und dann verschraubt.

Unmittelbar nach dem Zusammenbau betrug der Übergangswiderstand der erfindungsgemäß zusammengefügten Strom-Kupferschienen nur etwa 30% des Wertes der im Vergleichsversuch zusammengefügten Strom-Kupferschienen. Nach 2 Jahren betrug der Kontaktübergangswiderstand der erfindungsgemäß zusammengefügten Strom-Kupferschienen (0,03 µΩ) nur etwa 10% des Wertes der im Vergleichsversuch zusammengefügten Strom-Kupferschienen (0,29 µΩ) jeweils gemessen bei einer Leiterdicke von 5 mm und einer Kontaktfläche von 8000 mm². Die Kupferschienen wurden dazu vierfach verschraubt (M12). Zur Widerstandsmessung wurden zwei Ringelektroden in einer Vierdrahtmessung verwendet. Der Widerstand nahm insgesamt also in der erfindungsgemäßen Kontaktstelle innerhalb dieser Zeit überraschenderweise ab.

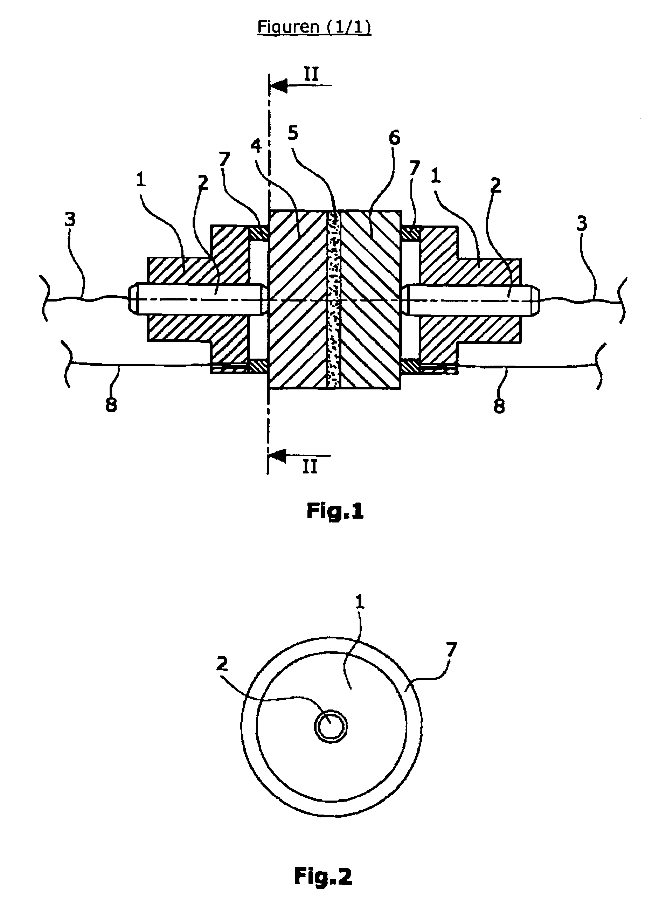

Fig. 1 und Fig. 2 zeigen den Aufbau für die Vierdrahtmessung. Der Körper der Ringelektroden 1 weist in seiner Mitte einen Federstift 2 auf, der über die Leitung 3 mit Messstrom versorgt wird. Der Federstift trifft im Zentrum der Ringelektrode auf die Kupferschienen 4 und 6, in deren Mitte sich die erfindungsgemäße Flüssigmetallpaste 5 befindet. Über die Elektrodenringe 7, die durch die Leitungen 8 gespeist werden, wird ein konstanter Strom zugeführt. Bei der Vierdrahtmessung fließt ein bekannter Strom durch das Messobjekt über zwei verschiedene Verbindungen. Das in Ohm kalibrierte Voltmeter wird zur Messung des Widerstandes an das Messobjekt angeschlossen. Bei der Vierdrahtmessung wird das Messgerät jedoch über eigene Verbindungen direkt an die Messpunkte am Messobjekt angelegt. In den Fig. 1 und Fig. 2 ist ersichtlich, dass der Strom nicht durch die Messpunkte (Aufsatzpunkte der Federstifte) oder Verbindungsleitungen des Messgerätes fließt. Der Widerstand der Federstifte und der Verbindungskabel wird daher nicht in die Messung miteinbezogen. So kann der Widerstand wesentlich genauer gemessen werden.

## Patentansprüche

1. Flüssigmetallpaste enthaltend Flüssigmetall und Oxid dieses Flüssigmetalls, **dadurch gekennzeichnet, dass** der Anteil an Oxid mindestens 0,1 Gew.% und der Schmelzpunkt des Flüssigmetalls höchstens 20 °C beträgt.

2. Flüssigmetallpaste gemäß Anspruch 1, **dadurch gekennzeichnet, dass** die Viskosität der Flüssigmetallpaste mindestens 50 Pa s, insbesondere mindestens 10⁴ Pa s bei 20 °C beträgt.

3. Flüssigmetallpaste gemäß einem der Ansprüche 1 oder 2, **dadurch gekennzeichnet, dass** das Flüssigmetall ausgewählt ist aus der Gruppe Quecksilber, Gallium-Indium-Zinn-Legierung oder Gallium-Indium-Zink-Kupfer-Legierung, insbesondere eine eutektische Legierung ist.

4. Flüssigmetallpaste gemäß Anspruch 3, **dadurch gekennzeichnet, dass** das Flüssigmetall eine Legierung enthaltend
Gallium in einem Bereich von 60 bis 75 Gew.%,
Indium in einem Bereich von 15 bis 24 Gew.%, und
Zinn in einem Bereich von 8 bis 17 Gew.% ist.

5. Flüssigmetallpaste gemäß einem der Ansprüche 1 bis 4, **dadurch gekennzeichnet, dass** der Schmelzpunkt des Flüssigmetalls höchstens 15 °C, insbesondere höchstens 10 °C beträgt.

6. Flüssigmetallpaste gemäß einem der Ansprüche 1 bis 5, **dadurch gekennzeichnet, dass** das Flüssigmetall und das Oxid des Flüssigmetalls innig miteinander vermischt sind.

7. Flüssigmetallpaste gemäß einem der Ansprüche 1 bis 6, **dadurch gekennzeichnet, dass** der Oxidgehalt in der Flüssigmetallpaste mindestens 0,5 Gew.%, insbesondere mindestens 0,8 Gew.% beträgt.

8. Verfahren zur Herstellung einer Flüssigmetallpaste, **dadurch gekennzeichnet, dass** man ein Flüssigmetall in Kontakt mit Sauerstoff rührt, so dass das an der Kontaktfläche mit Sauerstoff entstehende Oxid in das Flüssigmetall eingerührt wird, bis der Gehalt an Oxid in der Flüssigmetallpaste mindestens 0,1 Gew.% beträgt.

9. Verfahren gemäß Anspruch 8, **dadurch gekennzeichnet, dass** der Sauerstoff Luftsauerstoff ist.

10. Verfahren zu Verringerung des Kontaktwiderstandes von Kontaktstellen von elektrischen Leitern, **dadurch gekennzeichnet, dass** man die Kontaktstellen mit einer Flüsslgmetallpaste gemäß einem der Ansprüche 1 bis 7 versieht, anschließend die Leiter an den Kontaktstellen kontaktiert.

11. Verfahren gemäß Anspruch 10, **dadurch gekennzeichnet, dass** man daran anschließend die Leiter miteinander mechanisch verbindet, insbesondere kraftschlüssig verbindet.

12. Kontaktstelle eines ersten elektrischen Leiters, **dadurch gekennzeichnet, dass** diese mit einer anderen Kontaktstelle eines anderen zweiten elektrischen Leiters kontaktiert ist, wobei sich zwischen den Kontaktstellen die Flüssigmetallpaste gemäß einem der Ansprüche 1 bis 7 befindet.

13. Verwendung der Flüssigmetallpaste gemäß einem der Ansprüche 1 bis 7 zur Herabsetzung des Übergangswiderstandes bei der Verbindung von Leitern, insbesondere im Anlagenbau oder in Schaltgeräten.
